# EUROPEAN PATENT SPECIFICATION

(11) **EP 3 280 841 B1**
(45) Date of publication and mention of the grant of the patent: **16.06.2021**
(21) Application number: 16776988.4
(22) Date of filing: 01.04.2016
(51) Int. Cl.: D21C 11/00, D21C 11/04, B01D 61/00, C01B 17/34, B01D 69/02, B01D 71/02, C25B 1/16

(54) **METHOD FOR POLYSULFIDE PRODUCTION IN A KRAFT PULP MILL**
VERFAHREN ZUR POLYSULFIDERZEUGUNG IN EINER KRAFTZELLSTOFFANLAGE
PROCÉDÉ DE PRODUCTION DE POLYSULFURE DANS UNE USINE DE PÂTE KRAFT

(30) Priority: 09.04.2015 SE 1550427
(43) Date of publication of application: 14.02.2018
(73) Proprietor: Valmet AB, 851 94 Sundsvall (SE)
(72) Inventor: ANTONSSON, Stefan, SE-117 58 Stockholm (SE); LINDGREN, Christofer, SE-113 33 Stockholm (SE); LINDSTRÖM, Mikael, SE-181 66 Lidingö (SE); HOGEBRANDT, Eva, SE-653 46 Karlstad (SE)
(74) Representative: Becker & Kurig Partnerschaft Patentanwälte PartmbB
(86) International application number: PCT/SE2016/050276
(87) International publication number: WO 2016/163931

(56) References cited:
- EP-A1- 0 649 939
- EP-A1- 1 178 009
- WO-A1-95/00701
- WO-A1-97/22752
- WO-A1-97/42372
- WO-A1-2010/114468
- WO-A1-2013/066225
- US-A- 4 024 229
- US-A- 5 620 596
- US-A1- 2002 192 146
- US-A1- 2005 072 539
- US-B1- 6 261 411
- HARA, S.: 'New Polysulfide Pulping Process at Shirakawa and Hachinohe' TAPPI PROCEEDINGS PULPING CONFERENCE 1991, pages 107 - 113

## Description

### FIELD OF THE INVENTION

Our present invention relates to an improved polysulfide production process wherein a specific second filtration process is installed before the polysulfide reactor.

### BACKGROUND OF THE INVENTION

Several different methods are known for producing polysulfide cooking liquor to be used in kraft cooking of pulp. They all relate to 4 different ways of forming polysulfide, i.e. a) adding electricity and white liquor to a electrolytic cell; or b) feeding clarified white liquor, oxygen and sodium hydrogen sulfide to a reactor filled with activated carbon catalyst particles, and c) feeding unclarified white liquor with a high content of catalyst particles, often lime mud particles, through a reactor fed oxygen or air, where the particles are used as catalyst, followed by clarification after the reactions, and finally d) addition of elemental sulfur.

Some old methods also expose the white liquor to heat and pressure, while transforming the sulfide content to polysulfide, with or without addition of some kind of catalyst that could be black liquor or lime mud particles that may be present in the white liquor or manganese oxide additive. Using the particle content in the white liquor as catalyst is disclosed in; a) US5082526 where presence of lime mud particles is used as catalyst, and b) US5993601, where presence of green liquor particles is used as catalyst.

Natural increase of polysulfide content may also be obtained after extended storage, as shown in EP1356156, but in opposition shown to be anticipated from old examples utilizing the residual content of black liquor acting as catalyst during storage.

Further, polysulfide increase in the white liquor may also be obtained using electrolytic cells, and US3849278 disclose one such embodiment.

One known method is the Moxy, Mead oxidation process, developed by Mead and further developed by Mitsubihisi Paper and Chiyoda, wherein active carbon is used as catalyst in the polysulfide reactor and disclosed in an early patent US4024229. Variant of this concept are shown in; US4162187 where the active carbon is partly coated with PTFE.

US52345456 disclose a later version where off gases from black liquor is combusted and fed to the polysulfide reactor.

EP 0 649 939 discloses a method for processing white liquor or orange liquor wherein pure sodium hydroxide is extracted by using diffusion dialysis with an ion-exchange membrane.

In a known polysulfide production process like the Chiyoda polysulfide process, the content of suspended solids in the white liquor is reduced from some 10-100 ppm and down to less than 5 ppm, all described in *"*A new polysulfide process giving benefits to kraft pulp mill", R.Inaba; T.Matsumura; E. Watanabe; & B.Soehartomo, 1994 (all employees of Chiyoda). The Chiyoda polysulfide process has also been disclosed in
- Hara, S. and T. Ono (1988). "The Improved White Liquor Oxidation Process with The New Catalyst." Japan Tappi Journal 42: 46-51.
   - Hara, S.-i. (1991). "New Polysulfide Pulping Process at Shirakawa and Hachinohe". Tappi Pulping Conference.
   - Nishijima, H., R. Inaba, et al. (1995). "Review of Polysulfide/AQ Pulping to Date in Japanese Kraft Mills and the Impact on Productivity". Tappi Pulping Conference, Chicago, IL, Tappi.

The filtering technique used has been a filter bed technique, where the white liquor pass through a bed of granular filter particles, most often small anthracite particles having an average size of 1-2 mm. The content in the white liquor of suspended solids is captured in the bed and the entire bed needs to be regenerated and the solids needs to be flushed out at regular intervals. However, the only available method has been to fluidize the entire content of the bed by introducing a wash liquor, conventionally the already filtered white liquor, and send the wash filtrate back to the causticizing plant with the content of solids washed out. This wash out step typically needs to be activated once or twice a day at least, and thus the availability of the process decrease as no filtered white liquor may be obtained during the wash out step, and further a substantial volume of already filtered white liquor is lost during this wash step as the wash liquid volume exceeds the volume of the filter and needs to be used at a displacement ratio well over 2 (relative free volume of filter). The wash white liquor flow is large and therefore needs to be stored in a buffer tank before being returned back to causticizers at a lower continuous flow. Further, high capacity pumps is also needed for establishment of a fluidizing effect in the entire filter body enabling a wash out of the captured solids, increasing both investment costs as well as operational costs. In addition the filter needs further regeneration requiring shutdowns for acid washing, thus increasing the unavailability of the overall polysulfide manufacturing system. This typically occurs 4-12 times per year.

For some processes it is of importance that the white liquor is free from any solids content that may plug the reactor if especially dense packed beds with active carbon is used, or if electrolytic cells are used that may soon get a layer of the solids on the electrodes and membranes.

Hence, while it has been known that the white liquor needs to be clarified and have low content of suspended solids, filtering techniques used in polysulfide production processes has been filter beds where the white liquor pass and the suspended solids are captured in the bed, requiring wash out processes that reduce availability of the process and reduce amounts of the polysulfide production volumes.

### OBJECTS OF THE INVENTION

It is a primary object of the invention to obtain a white liquor oxidation process used for a polysulfide production process where the necessary filtering of the white liquor ahead of the oxidation reactor is done such that the process could be essentially continuous, keeping interruption of the polysulfide generation process to a minimum while providing a clarity below that of the traditional method and thus increasing availability of the following process step. This improves the polysulfide formation process to give a stable and continuous process who is subjected to less temporary shut downs and emptying of the reactor, hence reducing the transient operations at start up and shut down before establishing a steady state chemical conversion process.

It is a secondary object of the invention to obtain a polysulfide production process where the availability of the process may be improved substantially. The need for buffer tanks is reduced as the process may be designed with a process capacity close to that of the requested nominal production of partly or completely oxidized white liquor (also called orange liquor or oxidized white liquor).

Still another object of this invention is to provide an improved polysulfide production process with less operational cost, as no high capacity pumps needs to be installed capable of fluidizing the entire bed, in which scaling formation is reduced and plant economy increased.

### SUMMARY OF THE INVENTION

The invention is related to a method for producing a polysulfide cooking liquor, for use in a kraft pulp mill which comprises the steps of:
(a) adding burnt lime to green liquor in a slaker and passing the liquor to a series of causticizing vessels;
(b) passing the causticized liquor from the causticizing vessels to a first filtering or clarification process obtaining an accept flow of white liquor with a first order of suspended solids measured in ppm in the accept flow of white liquor and a reject flow of lime mud;
(c) passing the accept flow of white liquor through a second filtering process obtaining a filtered white liquor with a second order of suspended solids measured in ppm, said second order of suspended solids being at least half the order as of the first order of suspended solids and below 5 ppm, and
(d) passing the filtered white liquor through a polysulfide reactor with addition of an oxygen containing gas for promoting conversion of sulfides to polysulfide.

The invention is characterized in that the second filter process is performed in an essentially continuously operating cross flow filter, where a permeate passing through cross flow filter elements in the cross flow filter forms the filtered white liquor before sending the filtered white liquor to the polysulfide reactor and the discharged flow of retentate is bled off and sent back to the causticizing vessels.

The expression an essentially continuously operating cross flow filter is used for a process where the filtering process has an availability in excess of 95%, and typically up to 98%. Even if acid cleaning may be needed for the cross filter, such an acid cleaning needs only some 30 minutes per day, i.e. 2% of the time, and needs only some 20 m³/year of acid for this cleaning process. The reason is that the membrane in the cross filter to be cleaned is thin and calcium carbonate particles are easily dissolved in acid.

The oxidation process may be used for producing a polysulfide cooking liquor. In order to convert 99% of the sulfide content to thiosulfate, i.e. fully oxidized white liquor, is typically 4 times more oxygen needed for this conversion compared to an optimized concentration of polysulfide.

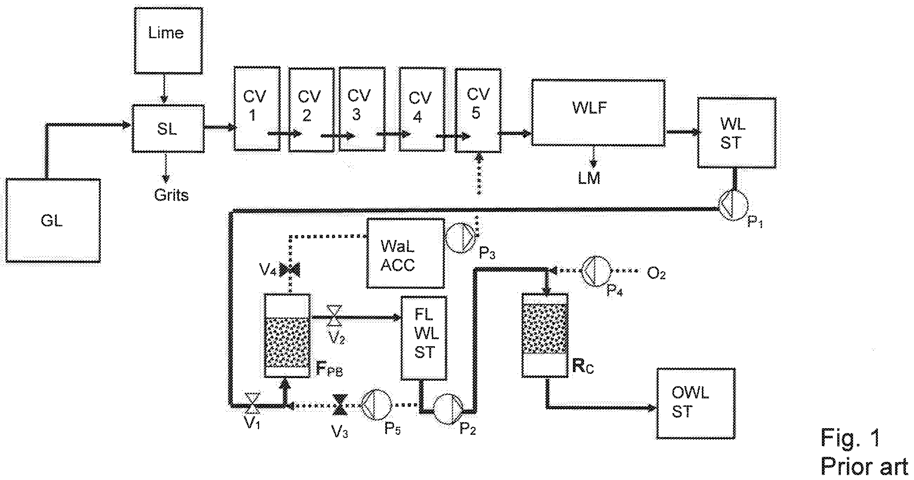

The usage of cross flow filters avoid all the disadvantages of granular filter beds that has been used up to date in polysulfide production processes of the Chiyoda process (described in figure 1), as well as the Moxy process that both require frequent washing of the entire bed and that never achieve a total removal of e.g. lime mud particles captured in the bed.

According to a preferred embodiment of the inventive method the cross flow filter used in the process is a ceramic filter body with an effective filter membrane thickness of 1-100 µm and with a pore size in the range of 0.1-10 µm in the filter membrane. The pore size and filter thickness of the filter membrane is a guarantee that the filter membrane maintains most of its filtering capacity over a longer period of time even if some particles may penetrate the filter membrane. The filter body may have a pore size exceeding that of the membrane by a factor of 5-20, and will allow unhindered passage for permeate once it has passed the membrane, and provides the mechanical strength of the membrane and the filter element as such.

Yet, the inventive method preferably make use of a polysulfide reactor in form of a catalytic reactor using a packed bed of active carbon as catalyst while adding oxygen to the catalytic process. This type of reactor is especially sensitive for blocking the flow paths of the white liquor due to particle content in the white liquor.

Alternatively, the inventive method preferably make use of a polysulfide reactor in form of an electrolytic cell. Also these electrolytic cells are sensitive for depositions on the cathode of the electrolytic cell due to particle content, i.e. calcium carbonate, in the white liquor. As the deposition increase in coverage and thickness over time the efficiency of the electrolytic cell drop in proportion to this order of deposition.

The inventive method also works in synergy with the preceding first filtering process if the first filtering process is done in a precoat filter, using the precoat as an active filter media to capture the calcium carbonate particles in the precoat. Precoat filter results in filtrates that contains very small amount of solids as the solids are captured in the precoat while offering a high production rate of clean filtrate per filter unit area.

In the inventive method is also the cross flow filters configured such that the cross flow filter elements are installed in at least 2 sets of cross flow filter elements. This improves the availability of the system and a continuous output of filtered white liquor as one set may be temporarily out of operation.

In an alternative configuration, at least 2 sets of cross flow filter elements are installed in series enabling use of only one single pump for circulating the retentate through the filters.

In yet an alternative configuration, at least 2 sets of cross flow filter elements are installed in parallel enabling availability of the system if one set is out of operation.

### BRIEF DESCRIPTION OF THE DRAWING

The above and other objects, features and advantages of the invention will become more readily apparent from the following description, reference being made to the figures in which:
Fig. 1 is a flow-diagram showing a conventional polysulfide production process, using a pre-filter in form of particle bed ahead of the reactor filled with active carbon; and
Fig. 2 is a flow-diagram showing the inventive polysulfide production process, using a pre-filter in form of a cross flow filter ahead of the reactor filled with active carbon; and
Fig. 3 shows the principles behind cross flow filters; and
Fig. 4a, show a ceramic membrane filter body used in the invention, while Fig 4b show a cross section view A-A in Fig 4a, and
Fig. 5 show an embodiment of the cross flow filters arranged in two sets arranged in series; and
Fig.6 show an embodiment of the cross flow filters arranged in two sets arranged in parallel.

### SPECIFIC DESCRIPTION AND PRIOR ART

### Prior art process

In figure 1 is disclosed a flow diagram in a conventional polysulfide production process, using a pre-filter F in form of particle bed ahead of the reactor R filled with active carbon. The white liquor production process starts with a green liquor tank GL that feed the green liquor to a slaker SL, wherein burnt lime is added under agitation. The slaker mixes the lime into the green liquor and separates larger pieces of grits from the liquor. The even mixture of lime and green liquor is then fed to a train of causticizing vessels CV1->CV2->CV3->CV4->CV5 wherein the causticizing process converts the green liquor to white liquor. The white liquor from the causticizing vessels contains a large amount of lime mud particles, the majority of the particle content being calcium carbonate particles that needs to be separated in a subsequent filtering or clarification process. In this embodiment is shown a white liquor filter WLF that may be either a disc filter or a tube filter that may or may not be using a formation of lime mud precoat on the filter surface, which results in low residual content of lime mud particles in the filtrate. Still, the residual content of lime mud particles may be in the order of some 10-100 ppm after this filtration or clarification. The filtered white liquor is sent to a White Liquor storage tank WLST. Before sending this white liquor to the polysulfide reactor it is further sent to a second filter F. This filter F uses granular filtration and may contain coarse as well as fine granular particles, conventionally anthracite granules that settles with the coarse granules in bottom and fine granules in top. During passage the calcium carbonate particles in the white liquor is penetrating the particle bed and is captured in the bed. The white liquor obtained from the second filtration is sent to a second filtered white liquor storage tank FL-WL-ST, and typically contains less than 5 ppm of calcium carbonate particles. The filtered white liquor is then suitable to be sent to a polysulfide reactor R, where the polysulfide concentration is increased by a catalytic reaction in a bed of active carbon while adding oxygen O₂. The final polysulfide is sent from reactor R to a polysulfide tank, or oxidized white liquor tank OWL-ST.

The disadvantage with this conventional process is that the filter bed in filter F needs to be regenerated and all calcium carbonate particles captured in the bed needs to be removed in order to prevent the filter to become blocked over time.

The method of regeneration implemented is to wash the entire particle bed vigorously with the already filtered white liquor to such an extent that the entire particle bed is fluidized. This is done by starting pump P₅ and opening valve V₃, while closing valve V₁, and introducing the pressurized white liquor into the bottom of the particle bed and flushing out the liquid via an open valve V₄, while valve V₂ is shut, with its content of calcium particles into a storage tank WaL-ACC capable of storing the entire volume of wash liquid used. Once the washing process is ended, the wash liquid used, with its content of calcium particles flushed out, is sent back to the process, and preferably before the first white liquor filter WLF. In order not to disturb the process, the wash liquid is returned as a small flow over an extended time.

### The Inventive process

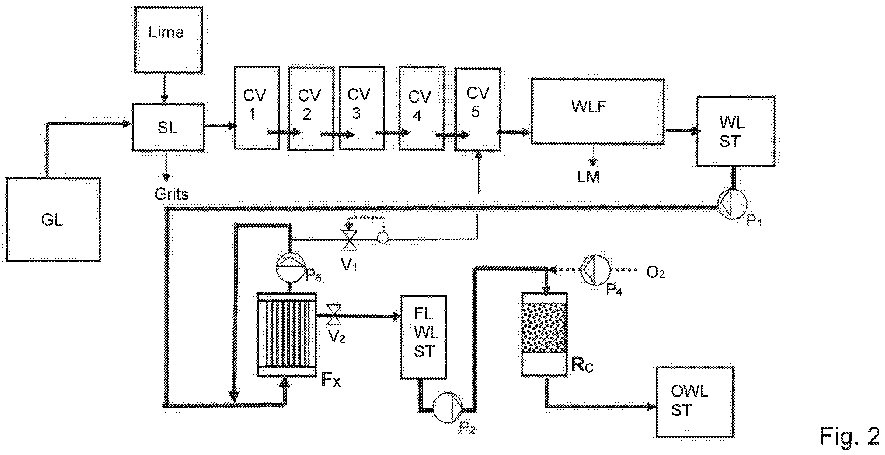

The inventive process is shown in figure 2, and the process steps are similar to that shown in figure 1 up to the second filtration of the white liquor in a filter Fx. This filter Fx uses a cross flow filter instead. The white liquor subjected to filtration in the cross flow filter Fx is recirculated via pump P₆ over the filter at a volume rate that is at least 2 times larger, preferably 4-10 times larger than the feed rate of white liquor from the white liquor storage tank WL-ST. This keeps the flow velocity high in the cross filter flushing off any particles from the surface of the membrane filter element. The volume rate of discharged permeate is the same as the feed flow, and permeate in form of filtered white liquor obtained from the second filtration is sent to filtered white liquor storage tank FL-WL-ST. This white liquor typically contains less than 5 ppm of calcium carbonate particles, and typically at a level of 0-1 ppm and 3 ppm at the most, as the discharged flow is only composed of the permeate. The filtered white liquor is then suitable to be sent to a polysulfide reactor R, where the polysulfide concentration is increased by a catalytic reaction in a bed of active carbon while adding oxygen O₂. The final polysulfide is sent from reactor R to a polysulfide tank, or oxidized white liquor tank OWL-ST.

In chemical engineering cross flow filtration is a type of filtration. Cross flow filtration is different from dead-end filtration in which the feed is passed through a membrane or bed, the solids being trapped in the filter and the filtrate being released at the other end. Cross-flow filtration gets its name because the larger part of the feed flow travels tangentially across the surface of the filter, rather than into the filter. The principal advantage of this is that the filter cake (which can blind the filter) is substantially washed away during the filtration process, increasing the length of time that a filter unit can be operational. It can be a continuous process, unlike batchwise dead-end filtration.

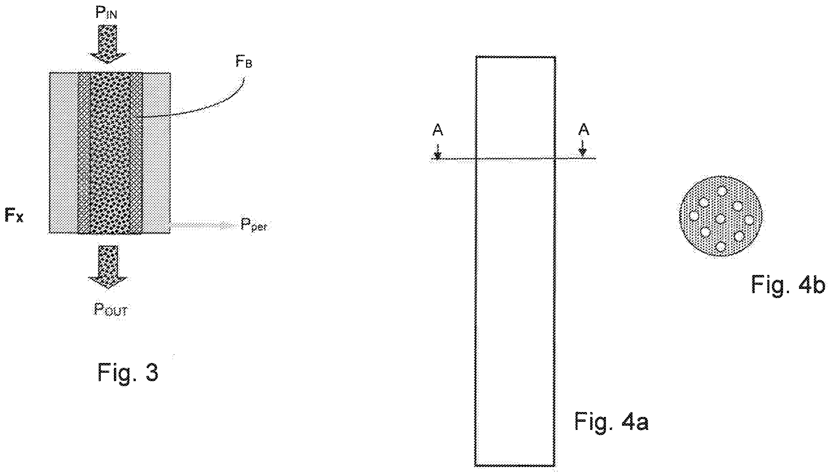

In figure 3 the principle function of a cross flow filter element is shown in a cross section view. A feed flow P_{IN} of the suspension containing particles is fed to a membrane filter body F_{B} which allows clean liquid to pass as a permeate Pₚₑᵣ, while the retentate flow P_{OUT} still contain most, if not all, particles contained in the suspension. In figure 4a is shown a typical elongated cylindrical membrane filter body, and in figure 4b a cross section A-A in Figure 4a is shown. The membrane body is made of a porous material and contains a number of flow passages for the suspension flow, and permeate is bled out from the filter body.

Now, this Cross flow filtration technique has been successfully implemented in green liquor filtration in Kraft pulp mills by CleanFlow AB, and the filtering body used with a membrane pore size of 0.1 - 10 µm, more preferred 0.1 - 5 µm and most preferred 0.2 - 1.0 µm, for the green liquor filtration application has been patented in SE-C-533 833 (corresponds to pending EP-A-2 414 585).

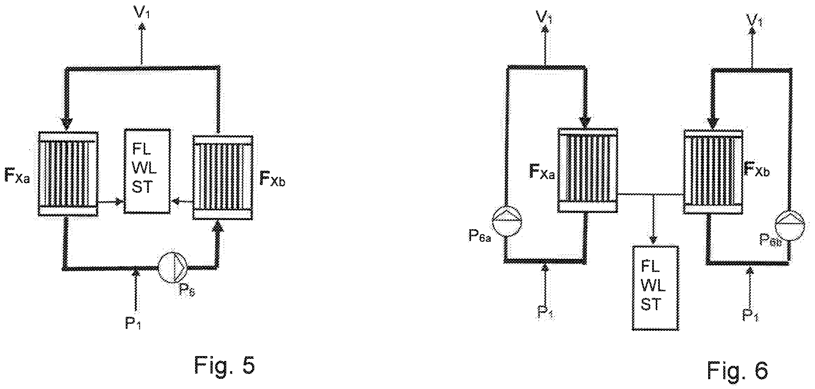

In figure 5 a first embodiment of the cross filter configuration is shown. In this embodiment two sets of the membrane filters are arranged in series, and one single pump P₆ is used to circulate the particle containing white liquor through both sets of filter arrangements. P₁ is the feed flow coming from pump P₁ in figure 2 and V₁ is the discharged flow of retentate bled off and sent back to the causticizing vessels. The advantage is that one single pump is used to circulate the white liquor trough the filters.

In figure 6 a second embodiment of the cross filter configuration is shown. In this embodiment two sets of the membrane filters are arranged in parallel, and thus two pumps P₆ₐ and P_{6b} are used to circulate the particle containing white liquor trough each set of filter arrangement. P1 is the feed flow coming from pump P₁ in figure 2 and V₁ is the discharge flow of retentate sent back to the causticizing vessels. The advantage is that one filter arrangement may be shut off during cleaning of the filter elements in that filter arrangement, but still an essentially continuous discharge flow of permeate may be obtained.

Cleaning of the filter elements in the white liquor filtering process is relatively simple as the bulk content of particles in the already filtered white liquor is calcium carbonate that relatively easy dissolves in an acidic cleaning cycle.

The cleaning process could also be a simple backwashing of the membrane filters, pressurizing the white liquor on the permeate side such that a reversal of flow is obtained over the membrane filters.

The membranes may also be cleaned in place, or by disconnecting an individual filter body as disclosed in figures 4a and 4b, blinding the connections in the system, and then clean the individual filter body. When cleaning the filters in place with acid also additional tanks and pumps (not shown) with acidic washing liquid are also installed, and could preferably be used in a system as disclosed in figure 6 where one set of filters may be cleaned at the time.

### SPECIFIC EXAMPLE

In a specific implementation of the invention the cross flow filter system is designed for a nominal production of 420 m³/h filtered white liquor, using ceramic membrane filters with a pore size of approximately 0.3-0.8µm. The white liquor filtered once before is obtained from a pressurized disc filter operating with a precoat of lime mud that reduce the content of lime mud particles in the white liquor to a level of 20 mg/l, i.e. this is thus the level of particles in the white liquor fed to the cross flow filters. The part of the retentate that is returned back to the causticizing vessels, preferably to last causticizing vessel ahead of the disc filter is, due to the recirculation and bleed off of permeate, experiencing an increase of the content of lime mud particles in the white liquor to a level of 1060 mg/l. The product liquor, i.e. the filtered white liquor has a very low content of lime mud particles, and in the mg/l scale less than 0 mg/l, and as measured in ppm well below 3 ppm. During normal operation varying in between 1-2 ppm. Compared with the nominal production of filtered white liquor, i.e. about 420 m³/h filtered white liquor, the recirculation rate through the filters is 2400 m³/h and the recirculated volume is pressurized to about 0.2-0.3 bar. The recirculation volume over the filters is thus in excess of 5.7 times that of the production volume of filtered white liquor

Above example is from a conventional causticizing plant with its specific lime recovery process, and the residual lime mud particle content in the white liquor may differ both in absolute level (mg/l or ppm) and in distribution of particle sizes, but cross flow filters may be modified using different pore sizes in the membrane adapted for the specific white liquor. However, the combination of a first filter and a subsequent cross flow filter reach astonishing low residual content of solids in the permeate. The reduction of particle content is especially important for the subsequent catalytic process in the polysulfide reactor, as this reactor may extend its availability at least 3-5 fold, before the active carbon bed is blocked, by reducing solids content in the white liquor from 5 ppm and down to 1 ppm. A similar positive effect is also obtained if the polysulfide conversion is done in an electrolytic cell, where deposits may be formed on the cathode depending on residual content of solids.

## Claims

1. A method for producing a polysulfide cooking liquor, for use in a kraft pulp mill which comprises the steps of:
(a) adding burnt lime to green liquor in a slaker and passing the liquor to a series of causticizing vessels;
(b) passing the causticized liquor from the causticizing vessels to a first filtering or clarification process obtaining an accept flow of white liquor with a first order of suspended solids measured in ppm in the accept flow of white liquor and a reject flow of lime mud
(c) passing the accept flow of white liquor through a second filtering process obtaining a filtered white liquor with a second order of suspended solids measured in ppm, said second order of suspended solids being at least half the order as of the first order of suspended solids and below 5 ppm, and
(d) passing the filtered white liquor through a polysulfide reactor with addition of an oxygen containing gas for promoting conversion of sulfides to polysulfide, ***characterized in that*** the second filter process is performed in an essentially continuously operating cross flow filter, where a permeate passing through cross flow filter elements in the cross flow filter forms the filtered white liquor before sending the filtered white liquor to the polysulfide reactor and the discharged flow of retentate (V₁) is bled off and sent back to the causticizing vessels.

2. The method defined in claim 1, ***characterized in that*** the cross flow filter used in the process has a ceramic filter body with an effective filter membrane thickness of 1-100 µm and with a pore size in the range of 0.1-10 µm in the filter membrane.

3. The method defined in claim 1, ***characterized in that*** the polysulfide reactor is a catalytic reactor using one or several beds of active carbon, with or without partial PTFE-coating as catalyst while adding oxygen to the catalytic process.

4. The method defined in claim 1, ***characterized in that*** the polysulfide reactor is an electrolytic cell.

5. The method defined in claim 1, ***characterized in that*** the first filtering process is done in a precoat filter, using the precoat as an active filter media to capture the calcium carbonate particles in the precoat.

6. The method defined in claim 1, ***characterized in that*** cross flow filter elements are installed in at least 2 sets of cross flow filter elements.

7. The method defined in claim 6, ***characterized in that*** at least 2 sets of cross flow filter elements are installed in series.

8. The method defined in claim 6, ***characterized in that*** at least 2 sets of cross flow filter elements are installed in parallel.

## Patentansprüche

1. Verfahren zum Herstellen einer Polysulfid-Kochlauge zur Verwendung in einer Kraftzellstoffanlage, das die Schritte umfasst:
(a) Zugabe von gebranntem Kalk zu Grünlauge in einem Löscher und Leiten der Lauge zu einer Reihe von Kaustifizierungsgefäßen;
(b) Leiten der kaustifizierten Lauge aus den Kaustifizierungsgefäßen zu einem ersten Filter- oder Klärungsprozess, wobei ein Annahmestrom von Weißlauge mit einer ersten Ordnung von suspendierten Feststoffen, gemessen in ppm, in dem Annahmestrom von Weißlauge und ein Ausschussstrom von Kalkschlamm erhalten wird
(c) Leiten des Annahmestroms von Weißlauge durch einen zweiten Filterprozess, wobei eine gefilterte Weißlauge mit einer zweiten Ordnung von suspendierten Feststoffen, gemessen in ppm, erhalten wird, wobei die zweite Ordnung von suspendierten Feststoffen mindestens die Hälfte der Ordnung der ersten Ordnung von suspendierten Feststoffen und unter 5 ppm beträgt, und
(d) Leiten der gefilterten Weißlauge durch einen Polysulfidreaktor unter Zugabe eines sauerstoffhaltigen Gases zum Fördern der Umwandlung von Sulfiden in Polysulfid, **dadurch gekennzeichnet, dass** der zweite Filterprozess in einem im wesentlichen kontinuierlich arbeitenden Querstromfilter durchgeführt wird, in dem ein Permeat, das durch Querstromfilterelemente in dem Querstromfilter hindurchgeht, die gefilterte Weißlauge bildet, bevor die gefilterte Weißlauge dem Polysulfidreaktor zugeführt wird, und der abfließende Strom von Retentat (V₁) abgeleitet wird und zu den Kaustifizierungsgefäßen zurückgeführt wird.

2. Verfahren gemäß Anspruch 1, **dadurch gekennzeichnet, dass** der in dem Verfahren verwendete Querstromfilter einen keramischen Filterkörper mit einer effektiven Filtermembrandicke von 1-100 µm und mit einer Porengröße im Bereich von 0,1-10 µm in der Filtermembran aufweist.

3. Verfahren gemäß Anspruch 1, **dadurch gekennzeichnet, dass** der Polysulfidreaktor ein katalytischer Reaktor ist, der ein oder mehrere Betten aus Aktivkohle mit oder ohne partielle PTFE-Beschichtung als Katalysator verwendet, wobei dem katalytischen Prozess Sauerstoff zugeführt wird.

4. Verfahren gemäß Anspruch 1, **dadurch gekennzeichnet, dass** der Polysulfidreaktor eine elektrolytische Zelle ist.

5. Verfahren gemäß Anspruch 1, **dadurch gekennzeichnet, dass** der erste Filterprozess in einem Zwischenschichtfilter durchgeführt wird, wobei die Zwischenschicht als ein aktives Filtermedium verwendet wird, um die Kalziumkarbonatpartikel in der Zwischenschicht einzufangen.

6. Verfahren gemäß Anspruch 1, **dadurch gekennzeichnet, dass** Querstromfilterelemente in mindestens 2 Sätzen von Querstromfilterelementen installiert werden.

7. Verfahren gemäßAnspruch 6, **dadurch gekennzeichnet, dass** mindestens 2 Sätze von Querstromfilterelementen in Reihe installiert werden.

8. Verfahren gemäß Anspruch 6, **dadurch gekennzeichnet, dass** mindestens 2 Sätze von Querstromfilterelementen parallel installiert werden.

## Revendications

1. Procédé de production d'une liqueur de polysulfure destinée à une utilisation dans une usine de pâte kraft, qui comprend les étapes suivantes :
(a) ajout de chaux vive dans de la liqueur verte dans un extincteur et passage de la liqueur vers une série de cuves de caustification ;
(b) passage de la liqueur caustifiée des cuves de caustification jusqu'à un premier processus de filtration ou de clarification en obtenant un flux acceptable de liqueur blanche avec un premier ordre de solides suspendus mesuré en ppm dans le flux acceptable de liqueur blanche et un flux de rejet de boue de chaux ;
(c) passage du flux acceptable de liqueur blanche à travers un second processus de filtration en obtenant une liqueur blanche filtrée avec un second ordre de solides suspendus mesuré en ppm, ledit second ordre de solides suspendus représentant au moins la moitié de l'ordre du premier ordre de solides suspendus et étant inférieur à 5 ppm, et
(d) passage de la liqueur blanche filtrée à travers un réacteur de polysulfure en ajoutant un gaz contenant de l'oxygène pour promouvoir la conversion de sulfures en polysulfure, **caractérisé en ce que** le second processus de filtration est réalisé dans un filtre à écoulement transversal fonctionnant en continu, où un perméat passant à travers des éléments de filtration à écoulement transversal dans le filtre à écoulement transversal forme la liqueur blanche filtrée avant d'envoyer la liqueur blanche filtrée vers le réacteur de polysulfure et que le flux déchargé de rétentat (V₁) est purgé et renvoyé aux cuves de caustification.

2. Procédé selon la revendication 1, **caractérisé en ce que** le filtre à écoulement transversal utilisé dans le processus comporte un corps de filtre en céramique doté d'une épaisseur de membrane de filtre effective de 1 à 100 µm et d'une taille de pores de l'ordre de 0,1 à 10 µm dans la membrane de filtre.

3. Procédé selon la revendication 1, **caractérisé en ce que** le réacteur de polysulfure est un réacteur catalytique utilisant un ou plusieurs lits de charbon actif, avec ou sans revêtement partiel en PTFE en tant que catalyseur tout en ajoutant de l'oxygène dans le processus catalytique.

4. Procédé selon la revendication 1, **caractérisé en ce que** le réacteur de polysulfure est une cellule électrolytique.

5. Procédé selon la revendication 1, **caractérisé en ce que** le premier processus de filtration est réalisé dans un filtre préenduit en utilisant le préenduit comme moyen de filtre actif pour capturer les particules de carbonate de calcium dans le préenduit.

6. Procédé selon la revendication 1, caractérisé en ce les éléments de filtre à écoulement transversal sont installés dans au moins 2 ensembles d'éléments de filtre à écoulement transversal.

7. Procédé selon la revendication 6, **caractérisé en ce qu'**au moins 2 ensembles d'éléments de filtre à écoulement transversal sont installés en série.

8. Procédé selon la revendication 6, **caractérisé en ce qu'**au moins 2 ensembles d'éléments de filtre à écoulement transversal sont installés en parallèle.
